Europäisches Patentamt

European Patent Office

Office européen des brevets

(19)

(11) **EP 1 285 737 B1**

(12) **EUROPEAN PATENT SPECIFICATION**

(45) Date of publication and mention
of the grant of the patent:
**19.07.2006 Bulletin 2006/29**

(51) Int Cl.:
*B29B 15/12* (2006.01)       *F16L 9/12* (2006.01)
*F16L 11/08* (2006.01)

(21) Application number: **01119690.4**

(22) Date of filing: **23.08.2001**

(54) **Reinforcement cords and fabrics for hoses and pipes**

Garne und Textilstoffe zur Verstärkung von Schläuchen und Rohren

Fils et étoffes textiles pour le renforcement des tuyaux et des conduites

(84) Designated Contracting States:
**AT BE CH CY DE DK ES FI FR GB GR IE IT LI LU MC NL PT SE TR**

(43) Date of publication of application:
**26.02.2003 Bulletin 2003/09**

(73) Proprietor: **MILLIKEN EUROPE N.V.**
**B-9000 Gent (BE)**

(72) Inventors:
• **De Meyer, Willy**
**9031 Drongen (BE)**
• **Faket, Mark**
**deceased (BE)**

• **Marynus, Alain**
**80240 Roisel (FR)**
• **Vangheluwe, Lieven**
**9600 Ronse (BE)**

(74) Representative: **HOFFMANN EITLE**
**Patent- und Rechtsanwälte**
**Arabellastrasse 4**
**81925 München (DE)**

(56) References cited:
**US-A- 5 660 210**       **US-B1- 6 248 450**

• **PATENT ABSTRACTS OF JAPAN vol. 2000, no. 16, 8 May 2001 (2001-05-08) & JP 2001 003267 A (TORAY IND. INC.), 9 January 2001 (2001-01-09)**

**Description**

Field of the Invention

The invention concerns cords and cord fabrics and methods of their preparation, methods of preparing a hose or pipe employing said cords or cord fabrics, and hoses or pipes obtainable by these methods.

Background of the Invention

Hoses are generally used for passage of a pressurized fluid, e.g., for pneumatic or hydraulic applications. The hose is required to have such a strength that it can withstand a high pressure. Therefore, most hoses are nowadays made of a rubber resin having a cord or cord fabric layer for reinforcement. A reinforcement fabric layer may be in the form of any known fabric composition such as wovens, knits, laid, non-woven, stitched, sewn and any possible combinations of these ways to manufacture a fabric. For hoses of small diameter, the reinforcement is generally provided by braiding threads or cords directly on a hose or pipe pre-form, whereas for larger diameters wrapping of the fabric strip around the pre-form is found to be more economical.

Pipes have generally a similar construction, but comprise a relatively rigid polymeric matrix instead of the flexible rubber used in hoses.

As yarn material, rayon is mostly used as reinforcement yarn, particularly in view of the fact that the rayon tensile curve is closer to the law of Hooke than other polymeric reinforcements, which have generally a decreased modulus at initial load. However, rayon is comparably expensive and has a strength of only about 4.9 cN/dtex.

On the other hand, US 5,660,210 proposes a fiber reinforced rubber hose containing two braided reinforcing thread layers. At least the lower thread layer includes a polyester thread having a tensile strength of 8 g or more per a unit denier, an elongation of 10 ± 1.5 %, and a loaded elongation of 2.7 ± 0.1% per a unit denier under 3 g load. The reinforcement is provided by braiding the lower thread layer on the surface of a tubular rubber layer which is composed of styrene-butadiene rubber or ethylene-propylene terpolymer.

Braided reinforcement layers on styrene-butadiene rubber or ethylene-propylene terpolymer do not require additional treatment to enhance the adhesion between the reinforcement layer and the rubber or between individual reinforcement layers, in contrast to reinforcements provided by wrapping of fabrics around the hose or pipe pre-form or reinforcements on specific rubbers which show a low adhesion to polyester such as chloroprene latex, nitrile latex or silicone rubber. However, this additional treatment was found to deteriorate the mechanical properties of the reinforcement fabrics such as elongation under load.

US 6,248,450 B1 discloses adhesive compositions for use in bonding rubber polymers to textiles.

In light of this prior art, it is the object underlying the present invention to provide a reinforcement for hoses and pipes to be used in combination with any polymer matrix and which has sufficient strength to withstand high pressure.

It is another object of the present invention to provide a process for preparing a corresponding reinforcement.

Summary of the Invention

The first object of the invention is solved by the provision of a cord fabric according to claim 1.

The second object of the invention is solved by the method according to claim 12.

The invention also provides the use of the cord fabric for reinforcing a polymer or rubber product.

Detailed Description of the Invention

A cord fabric is a fabric the tensile strength of which in longitudinal direction (in case of wovens the warp direction) is significantly higher than the tensile strength in the direction perpendicular to the longitudinal direction (in case of wovens the weft direction). The tensile strength in the perpendicular (weft) direction is usually 20 % or less, preferably 10 % or less of the tensile strength in the longitudinal (warp) direction. The tensile strength of a cord may be determined by taking the cord prior to weaving or by taking the cord out of the fabric and performing a tensile test in accordance with ASTM D-2256 for tensile testing of yarns.

Tensile strength, tenacity, and elongation under load and elongation at break are determined at standard conditions. The tension test providing these data is generally carried out according to ASTM D-2256.

The cord fabric according to the present invention comprises polyester yarn as reinforcement yarn. Since the reinforcement is usually provided by the warp yarn, the polyester yarn is generally used as main component of the warp yarn. Thus, according to the present invention, polyester is preferably used in an amount of at least 60 wt.% of the reinforcement or warp yarn, more preferably at least 80 wt.%, most preferably 100 wt.% with respect to the total amount of reinforcement or warp yarn.

According to the present invention, any polyester yarn may be used, both monofilament yarns and multifilament yarns, although multifilament yarns and ply yarns of two filaments are preferred.

Preferred are low twist yarns. The twist level of the polyester yarn is thus preferably less than 150 turns per meter, more preferably less than 80 turns per meter, most preferably a polyester yarn having no twist at all is used. In the case that polyester yarns having no twist are used, intermingled yarns are preferred.

In a preferred embodiment, the polyester yarn is a HT (high tenacity; tenacity of more than 6cN/dtex [6 g/dtex]; generally showing an elongation of 12 % to 20 %) and in particular a HMLS (high modulus low shrinking; generally showing an elongation of less than 12 %) polyester yarn. Particularly preferred are polyester yarns having a tenacity of at least 6 cN/dtex [6.0 cN/dtex], more preferably a tenacity in the range of 6 to 10 cN/dtex [6 to 10 g/dtex], most preferably in the range of 7 to 8.3 cN/dtex [7.0 to 8.5 g/dtex].

The titer of the polyester yarn is preferably in the range of 1100 to 6600 dtex.

The cord fabric of the present invention has a woven or knitted construction or a construction of a combination of these fabrication ways.

In a first step of the manufacture of a woven or knitted, cord fabric of the present invention, the yarn comprising the polyester yarn as supplied by a yarn manufacturer is first assembled and then optionally twisted prior to beaming. In a more preferred embodiment, the fabric is directly woven or knitted from a creel.

The cord fabric is then produced in a manner known to the skilled in the art. The fabric construction or weave is not limited. Furthermore, there are no restrictions with respect to the loom technology, although shuttleless looms are preferred.

The warp density mainly depends on the requested burst pressure and diameter of the hose or pipe. For most applications, the preferred range of the warp density is from 4000 to 100000 dtex/cm, more preferably 10000 to 40000 dtex/cm, the warp density being defined by the product of number of ends per cm of warp yarn times the thickness of the warp yarn in dtex.

Particularly preferred embodiments have the following warp constructions and warp densities:

```
2200 dtex x 7.6 ends/cm = 16720 dtex/cm

3300 dtex (1100*3) x 6.9 ends/cm = 22720 dtex/cm

3300 dtex (1100*3) x 7.8 ends/cm = 25740 dtex/cm

4400 dtex (2200*2) x 8.4 ends/cm = 36960 dtex/cm
```

No limitations exist with respect to the weft yarn as long as it fulfils its primary purpose to secure the regular distribution of the reinforcing yarn in the fabric. However, to minimize fraying of the selvedge yarn after slitting or tearing, a yarn spun out of short fibers e.g. cotton is preferred. The preferred length of the weft fibers is in the range of 19 to 51 mm.

The weft density is preferably in the range of 0.4 to 5 picks/cm, more preferably 0.8 to 2 picks/cm of warp thread.

The cord fabric of the present invention is coated with a composition to enhance adhesion to the subsequently applied rubber composition, so-called adhesion promoters, and/or with a tackifier.

Any composition known to enhance the adhesion between fabric and rubber can be used according to the present invention. The treatment with adhesion promoter is preferably effected by dipping the yarn or fabric in an RFL-formulation (resorcinol formaldehyde latex), preferably an aqueous RFL-formulation. The formulation contains a resorcinol-formaldehyde (RF) condensate. The RF liquid is not limited in its type, and there can be used, for example, a novolac type, a resol type or a mixed type of those. The molar ratio of resorcinol to formaldehyde is preferably 1/1 to 1/3. Latex (e.g. a vinylpyridine latex) is added in a weight ratio of the resorcinol-formaldehyde of typically 4/1 to 15/1. The solid content of the RFL formulation is preferably from 5 to 20 % by weight. Preferred adhesion promoters include those disclosed in US 6,248,450.

Although the step of applying an adhesion promoter may be carried out before constructing the fabric by weaving or knitting, it is preferably carried out afterwards by dipping or spraying the adhesion promoter on the fabric and subsequent drying and heatsetting. The drying is preferably carried out at a temperature of 100 to 140°C, more preferably 110 to 130°C, most preferably 120°C, the drying time being preferably in the range of 0.2 to 2 minutes, more preferably 0.5 to 1.5 minutes, most preferably 1 minute. The subsequent heatsetting for polymerising the adhesion promoter is preferably carried out at a temperature in the range of 160 to 200°C, more preferably 170 to 190°C, most preferably 180°C, the heatsetting time being preferably in the range of 0.2 to 2 minutes, more preferably 0.5 to 1.5 minutes, most preferably 1 minute.

The amount of adhesion promoter applied to the fabric is preferably in the range of 1 to 30 wt.%, more preferably 5 to 15 wt.%, most preferably 8 to 12 wt.% with respect to the total dry weight of the cord fabric.

The yarns or fabric may also undergo a plasma or corona treatment to promote or enhance their adhesion to the rubber. The plasma or corona treatment can be done prior to or instead of the yarn or fabric dipping operation.

It has been found that even if polyester yarn showing satisfactory mechanical properties is used in the production of the fabric, such treatment to promote adhesion may deteriorate the modulus of the yarn. On the basis of this finding, it was found that the modulus of the cord fabric can be adjusted by stretching the cord fabric before and/or during polymerisation of the adhesion promoter.

For example, this stretching may be carried out by applying a tension of at least 0.01 N/dtex for at least one minute during the polymerisation, more preferably at least 0.02 N/dtex, for example 0.025 N/dtex. The stretching is carried out in the direction of the polyester yarn, that is in reinforcement direction. Although the stretching conditions depend on the temperature, the exposure time, and the applied tension, it is particularly preferred to apply a stretch of at least 0.01 N/dtex, more preferably at least 0.02 N/dtex, for example 0.025 N/dtex both after dipping into a solution of the adhesion promoter and heatsetting. Additionally, it is particularly preferred to apply a tension of at least 0.01 N/dtex, more preferably at least 0.02 N/dtex, for example 0.025 N/dtex at 200 °C to 220°C, more preferably 210°C to the cord fabric during at least 1 minute prior to dipping the fabric into a solution of the adhesion promoter and then to maintain a stretch of at least 0.01 N/dtex during dipping and heatsetting. The exact stretching conditions can be easily determined by varying the temperature, exposure time and tension and checking the elongation under load of the cord fabric obtained. The cord fabric of the present invention shows a comparably high modulus at initial load, i.e. the cord fabric of the present invention has an elongation of 3.5 % or less, preferably 2.75 % or less, more preferably 2.5 % or less, at a load of 2.3 cN/dtex [2.35 g/dtex] in the direction of the polyester yarn. An elongation under load within this range ensures that the fabric can sufficiently withstand a volume expansion under high pressures.

Moreover, the cord fabric of the present invention has preferably a maximum elongation at break of 10 %, more preferably an elongation at break in the range of 3 to 8 %, in the direction of the polyester yarn.

Furthermore, the residual shrinkage of the cord fabric of the present invention is preferably low. The fabric of the present invention thus has preferably a shrinkage of 3.5 % or less after exposure in hot air to 170°C during 3 minutes in the direction of the polyester yarn. In a more preferred embodiment, the shrinkage is less than 2.5 % after exposure to 170 °C during 3 minutes in the direction of the polyester yarn.

The cord fabric of the present invention is preferably also coated by a tackifier. A tackifier is a substance that, when applied to the fabric, provides sufficient stickiness to the fabric that is needed to hold the fabric in place on the pre-form of the hose or pipe during subsequent manufacturing operations. Although any tackifying product may be used as long as it shows sufficient stickiness, preferred tackifiers include pressure sensitive adhesives such as natural and synthetic rubbers, rosins, phenol-formaldehyde resins, hydrocarbon resins, rubbers in conjuntion with rosins, phenol-formaldehyde resins, or hydrocarbon resins, polyacrylates, polymethacrylates, poly(vinyl ethers), polyisobutenes and polyurethanes. Particularly preferred are aqueous tackifier systems.

The amount of tackifier is preferably in the range of 1 to 40 wt.%, more preferred in the range of 3 to 25 wt.%, even more preferred in the range of 5 to 15 wt.% with respect to the total dry weight of the cord fabric.

It is generally easy to determine as to whether a specific substance it suitable as tackifier since it can be easily found out whether the substance fulfils the above-indicated purpose of the tackifier. In case of doubt, the suitability of a substance as a tackifier in the present invention may be determined as follows: Two probes of fabric (e.g. a fabric with polyester warp yarn 2200/1, 7.6 ends per cm and cotton yarn of 110 dtex as weft yarn, the fabric being woven with 1.8 picks/cm) are mounted in a TA-XT2I Texture analyser (TA-Instruments) with a contact surface of 25 cm$^2$, the tackifier to be tested being applied over the whole contact surface. A 5 kg loadcell is used and a preload of 20 N is applied during 60 seconds. The adhesive forces were then measured with a speed of 0.2 mm/s. Thereby a curve is obtained, the maximum of which is referred to as peak force. If the peak force measured in the test is more than 0.1 N, the substance is suitable to be used as tackifier in combination with the fabric of the test for reinforcing hoses or pipes. The adhesion between two non-tackified fabrics is set to 0 N in this test. More preferred are those tackifiers which show a peak force of at least 1 N in this test. The same test may be carried out with fabrics which are coated with adhesion promoter to check whether a specific substance is suitable in combination with a specific adhesion promoter.

The reinforcement fabric may be tackified at just one surface, but is more preferably tackified at both. For example, the entire fabric may be impregnated with a tackifying substance. The coating operation of the fabric with the tackifier may be performed by means of dipping or spraying the complete fabric. Alternatively, the reinforcing yarns may themselves have been individually treated or coated before their incorporation in the cord fabric.

When drying the tackifier on the fabric, it is preferred to apply tension on the fabric. It is particularly preferred to apply a tension of at least 0.01 N/dtex during at least 1 minute, for example a tension of between 0.005 N/dtex and 0.02 N/dtex for 0.5 to 2 minutes. The exact stretching conditions can be easily determined by varying the temperature, exposure time and tension and checking the elongation under load of the cord fabric obtained. The drying is preferably carried out at a temperature in the range of 100 to 140°C.

According to the present invention, the cord fabric may be coated with adhesion promoter or tackifier depending on the application of the cord fabric. In a preferred embodiment, the cord fabric is coated with both adhesion promoter and tackifier.

It is particularly preferred to apply the tackifier to the cord fabric simultaneously with the adhesion promoter. In this case, the above described preferred treatment conditions for the treatment of the adhesion promoter are also preferred for the simultaneous treatment of adhesion promoter and tackifier.

The cord fabric of the invention is then preferably slit into reels of fabric strip or tape, with the reinforcement yarns or cords preferably extending in longitudinal direction of the strip. The slitting is preferably performed in a manner so that the strip will preferably have the same number of ends over the whole length of roll, i.e. without cutting through any warp yarn. The tackifying helps to maintain the integrity of the fabric strips after slitting the reinforcement fabric. The strip or tape may then be packaged for supplying to hose and pipe manufacturers.

Alternatively, the fabric, preferably coated with adhesion promoter could be packaged and sold as such to the hose and pipe manufacturer who then applies the tackifier such as rubber on the fabric, preferably by calandering. Subsequently, the fabric may be slit in tape form and then for example be used on spools for hose manufacturing.

The present invention also provides a cord, comprising polyester yarn which is coated with an adhesion promoter and/or tackifier, having an elongation of 3.5 % or less, preferably 2.75 % or less at a load of 2.3 cN/dtex [2.35 g/dtex]. The cord of the present invention has a preferred elongation at break in the range of 10 % or less, more preferably 3 to 8 % in the direction of the polyester yarn. The polyester yarn, the type and amounts of adhesion promoter and tackifier used in this embodiment are the same as in the cord fabric of the present invention. The treatment conditions with respect to the application of adhesion promoter and/or tackifier are also the same. However, instead of manufacturing a fabric using polyester yarn, the cord of the present invention is provided by treating a polyester monofilament or multifilament yarn or a ply yarn accordingly. It is preferred that the cord of the present invention contains at least 60 wt.% polyester yarn, more preferably at least 80 wt.% polyester yarn, most preferably 100 wt.% polyester yarn.

To ensure the low modulus of the cord of the present invention at initial load, it was found to be essential to apply a tension of at least 0.01 N/dtex for at least one minute on the cord during the polymerisation of the adhesion promoter and/or the drying of the tackifier. The same process conditions as described above with respect to the cord fabric were found to be beneficial for the preparation of the cord of the present invention.

Before supplying the cord of the present invention to hose manufacturers, the cord is preferably wound up and packaged.

The cord fabrics of the present invention may be employed in the production of a hose or pipe.

The production method comprises the steps of:

(a) providing a strip of fabric according to the present invention,
(b) forming a pre-form of said hose or pipe comprising a polymer matrix, and
(c) applying the fabric directly to the polymer matrix of the hose or pipe pre-form by wrapping the fabric strip around the pre-form.

In this embodiment of the present invention, the hose or pipe has a preferred inside diameter of larger than 2.5 cm. The pre-form may be made of any polymer or rubber material. For pre-forms of hoses, the rubber to be used includes natural rubber, nitrile rubber (NBR), hydrogenated nitrile rubber (hydrogenated NBR), butadiene rubber (BR), isoprene rubber (IR), chlorosulfonic polyethylene (CSM), chloroprene rubber (CR), ethylene-propylene-diene rubber (EPDM), styrene-butadiene rubber (SBR), and silicone rubber.

The fabric strip is then applied directly to the polymer matrix of the hose or pipe pre-form by wrapping the strip around the pre-form, preferably by wrapping in a helical fashion. The gauge of the fabric strip is preferably calculated according to the formula: $G = 0.705 \times \pi \times d$, where G is the gauge, and d is the diameter of the pre-form.

The wrapping around the pre-form is preferably carried out at an angle of 45 °C to 65 °C with respect to the longitudinal direction of the pre-form. According to the present invention, it is particularly preferred to wrap an even number of reinforcement layers around the pre-form, most preferably 2, 4, or 6 layers, half the layers being wrapped in one direction (e.g. forming a helix with left-handed orientation), while the other half is wrapped in the other direction (e.g. forming a helix with right-handed orientation).

Further polymer or rubber material is then typically extruded over the wrapped reinforcement fabric.

Example:

The cord fabrics were woven using 1100/2ply HMLS polyester yarn (supplied by Kosa) as warp yarn in a warp density of 7.6 ends/cm and cotton yarn of 110 dtex as a weft yarn. A tension of 0.025 N/dtex at 210°C during 1 minute was then applied to the cord fabric in the direction of the warp yarn. The fabric was subsequently dipped into an aqueous adhesion promoter system (a commercially available RFL formulation), then dried under a tension of 0.025 N/dtex at 120°C for one minute and then polymerised at a temperature of 180°C for one minute while keeping the tension of 0.025 N/dtex. Then the fabric was dipped in a water-based tackifier solution and dried at a temperature of 120°C during one minute under a tension of 0.010 N/dtex.

The cord fabric was then slit. The separate rolls were prepared accordingly and then tested on a Lloyd single end tester with a load of 5000 N at a speed of 300 mm/minute.

The fabrics showed the following properties:

Roll 1:    elongation under load of 2.3 cN/dtex [2.35 g/dtex]: 2.37 % elongation at break 8.83 % (breakload 155.6 N)

Roll 2:    elongation under load of 2.3 cN/dtex [2.35 g/dtex]: 2.37 % elongation at break 8.55 % (breakload 155.9 N)

Roll 3:    elongation under load of 2.3 cN/dtex,[2.35 g/dtex]: 2.41 % elongation at break 8.66 % (breakload 155.6 N)

**Claims**

1. Cord fabric, comprising polyester yarn which has an elongation of 3.5 % or less at a load of 2.3 cN/dtex [2.35 g/dtex] in the direction of the polyester yarn, **characterized in that** it is coated with an adhesion promoter and/or tackifier and **in that** it has a woven construction having warp and weft yarns or a knitted construction.

2. Cord fabric according to claim 1, wherein the adhesion promoter is present in an amount of from 1 to 30 wt.-% with respect to the total dry weight of the cord.

3. Cord fabric according to any of the preceding claims, wherein the adhesion promoter comprises a resorcinol formaldehyde latex.

4. Cord fabric according to any of the preceding claims, wherein the tackifier is present in an amount of from 1 to 40 wt.% with respect to the total dry weight of the cord.

5. Cord fabric according to any of the preceding claims, wherein the tackifier is a pressure-sensitive adhesive.

6. Cord fabric according to any of the preceding claims, having an elongation of 2,75 % or less at a load of 2.3 cN/dtex [2.35 g/dtex] in the direction of the polyester yarn.

7. Cord fabric according to any of the preceding claims, having a maximum elongation at break of 10 % in the direction of the polyester yarn.

8. Cord fabric according to any of the preceding claims, having an elongation at break in the range of 3 % to 8 % in the direction of the polyester yarn.

9. Cord fabric according to any of the preceding claims, showing a shrinkage of 3.5 % or less after exposure to 170°C during 3 minutes in the direction of the polyester yarn.

10. Cord fabric according to any of the preceding claims, wherein the polyester yarn has a tenacity of at least 6.0 cN/dtex.

11. Cord fabric according to any of the preceding claims, wherein the twist level of the polyester yarn is less than 150 turns per meter.

12. Method of preparing a cord fabric according to any of claims 1 to 11, comprising the steps of

    (a) producing a fabric by employing polyester yarn as warp yarn,
    (b) treating the fabric with adhesion promoter and/or tackifier,
    **characterized in that** the method additionally comprises the step of
    (c) stretching the fabric with a load of at least 0.01 N/dtex for at least 1 minute in the direction of the polyester yarn.

**13.** Method according to claim 12 wherein the adhesion promoter and/or tackifier is applied from an aqueous system.

**14.** Method according to any of claims 12 or 13 wherein the fabric or yarn is stretched with a load of at least 0.01 N/dtex for at least 1 minute in the direction of the polyester yarn during the drying of the adhesion promoter and/or the polymerisation of the adhesion promoter and/or the drying of the tackifier.

**15.** Use of the cord fabric of any of claims 1 to 11 for reinforcing a polymer or rubber product.

**16.** Use according to claim 15, wherein the polymer or rubber product is a pipe or a hose.


**Patentansprüche**

**1.** Kordstoff, umfassend Polyestergarn mit einer Dehnung von 3,5 % oder weniger bei einer Belastung von 2,3 cN/dtex (2,35 g/dtex) in der Richtung des Polyestergarns, **dadurch gekennzeichnet, daß** er mit einem Adhäsionsförderer und/oder Klebstoff beschichtet ist und daß er eine gewebte Konstruktion mit Kett- und Schußgarnen oder eine gewirkte Konstruktion aufweist.

**2.** Kordstoff nach Anspruch 1, wobei der Adhäsionsförderer in einer Menge von 1 bis 30 Gew.% in Bezug auf das Gesamttrockengewicht des Kords vorliegt.

**3.** Kordstoff nach einem der vorhergehenden Ansprüche, wobei der Adhäsionsförderer ein Resorcinolformaldehydlatex umfaßt.

**4.** Kordstoff nach einem der vorhergehenden Ansprüche, wobei der Klebstoff in einer Menge von 1 bis 40 Gew.% in Bezug auf das Gesamttrockengewicht des Kords vorliegt.

**5.** Kordstoff nach einem der vorhergehenden Ansprüche, wobei der Klebstoff ein Haftkleber ist.

**6.** Kordstoff nach einem der vorhergehenden Ansprüche, mit einer Dehnung von 2,75 % oder weniger bei einer Belastung von 2,3 cN/dtex (2,35 g/dtex) in der Richtung des Polyestergarns.

**7.** Kordstoff nach einem der vorhergehenden Ansprüche, mit einer maximalen Bruchdehnung von 10 % in der Richtung des Polyestergarns.

**8.** Kordstoff nach einem der vorhergehenden Ansprüche, mit einer Bruchdehnung in dem Bereich von 3 % bis 8 % in der Richtung des Polyestergarns.

**9.** Kordstoff nach einem der vorhergehenden Ansprüche, mit einer Schrumpfung von 3,5 % oder weniger nach Aussetzen an 170°C über 3 Minuten in Richtung des Polyestergarns.

**10.** Kordstoff nach einem der vorhergehenden Ansprüche, wobei das Polyestergarn eine Festigkeit von mindestens 6,0 cN/dtex aufweist.

**11.** Kordstoff nach einem der vorhergehenden Ansprüche, wobei das Zwirnmaß des Polyestergarns weniger als 150 Drehungen pro Meter beträgt.

**12.** Verfahren zur Herstellung eines Kordstoffs nach einem der Ansprüche 1 bis 11, umfassend die Schritte:

(a) Herstellen eines Stoffs unter Verwendung eines Polyestergarns als Kettgarn,
(b) Behandeln des Stoffs mit einem Adhäsionsförderer und/oder Klebstoff,
**dadurch gekennzeichnet, daß** das Verfahren zusätzlich den Schritt
(c) Strecken des Stoffs bei einer Belastung von mindestens 0,01 N/dtex über mindestens 1 Minute in Richtung des Polyestergarns

umfaßt.

**13.** Verfahren nach Anspruch 12, wobei der Adhäsionsförderer und/oder Klebstoff aus einem wäßrigen System aufgetragen wird.

**14.** Verfahren nach einem der Ansprüche 12 oder 13, wobei der Stoff oder das Garn mit einer Belastung von mindestens 0,01 N/dtex über mindestens 1 Minute in Richtung des Polyestergarns während des Trocknens des Adhäsionsförderers und/oder der Polymerisation des Adhäsionsförderers und/oder dem Trocknen des Klebstoffs gestreckt wird.

**15.** Verwendung des Kordstoffs nach einem der Ansprüche 1 bis 11 zur Verstärkung eines Polymer- oder Gummiprodukts.

**16.** Verwendung nach Anspruch 15, wobei das Polymer- oder Gummiprodukt ein Rohr oder ein Schlauch ist.

**Revendications**

**1.** Tissus cordé, comprenant un fil de polyester qui a une élongation égale ou inférieure à 3,5 % pour une charge de 2,3 cN/dtext [2,35 g/dtext] dans la direction du fil de polyester, **caractérisé en ce qu'**il est revêtu avec un promoteur d'adhésion et/ou un agent poisseux et en cela a une armature tissée qui a des fils dans le sens chaîne et le sens trame ou une armature tricotée.

**2.** Tissus cordé selon la revendication 1, **caractérisée en ce que** le promoteur d'adhésion est présent en une quantité allant de 1 à 30 % en poids, par rapport au poids total à sec de fil.

**3.** Tissus cordé selon l'une quelconque des revendications précédentes, **caractérisée en ce que** le promoteur d'adhésion comprend un latex résorcinol-formaldéhyde.

**4.** Tissus cordé selon l'une quelconque des revendications précédentes, **caractérisée en ce que** l'agent poisseux est présent en une quantité allant de 1 à 40 % en poids, par rapport au poids total à sec de fil.

**5.** Tissus cordé selon l'une quelconque des revendications précédentes, **caractérisée en ce que** l'agent poisseux est un adhésif sensible à la pression.

**6.** Tissus cordé selon l'une quelconque des revendications précédentes, ayant une élongation égale ou inférieure à 2,75 % pour une charge de 2,3 cN/dtext [2,35 g/dtext] dans la direction du fil de polyester.

**7.** Tissus cordé selon l'une quelconque des revendications précédentes, ayant une élongation maximum à la rupture de 10 % dans la direction du fil de polyester.

**8.** Tissus cordé selon l'une quelconque des revendications précédentes, ayant une élongation à la rupture dans le domaine de 3 % à 8 % dans la direction du fil de polyester.

**9.** Tissus cordé selon l'une quelconque des revendications précédentes, montrant un retrait égal ou inférieur à 3,5 %, dans la direction du fil de polyester, après exposition à 170°C pendant 3 minutes.

**10.** Tissus cordé selon l'une quelconque des revendications précédentes, **caractérisé en ce que** le fil de polyester a un ténacité d'au moins 6,0 cN/dtex.

**11.** Tissus cordé selon l'une quelconque des revendications précédentes, **caractérisée en ce** le niveau de torsion du fil de polyester est inférieur à 150 tours par mètre.

**12.** Procédé de préparation d'un tissus cordé selon l'une quelconque des revendications 1 à 11, comprenant les étapes :

(a) de production d'un tissus en utilisant un fil de polyester comme fil dans le sens chaîne,
(b) de traitement du tissus avec un promoteur d'adhésion et/ou un agent poisseux,
**caractérisé en ce que** le procédé comprend en plus l'étape,
(c) d'étirage du tissus avec une charge d'au moins 0,01 N/dtex pendant au moins 1 minute dans la direction du fil de polyester.

**13.** Procédé selon la revendication 12, **caractérisé en ce que** le promoteur d'adhésion et/ou l'agent poisseux est appliqué à partir d'un système aqueux.

14. Procédé selon l'une quelconque des revendications 12 ou 13, **caractérisé en ce que** le tissus ou le fil est étiré avec une charge d'au moins 0,01 N/dtex pendant au moins 1 minute dans la direction du fil de polyester pendant le séchage du promoteur d'adhésion et/ou la polymérisation du promoteur d'adhésion et/ou le séchage de l'agent poisseux.

15. Utilisation du tissus cordé selon l'une quelconque des revendications 1 à 11 pour le renforcement d'un polymère ou d'un produit caoutchouteux.

16. Utilisation selon la revendication 15, **caractérisée en ce que** le polymère ou le produit caoutchouteux est une conduite ou un tuyau.